# EUROPEAN PATENT APPLICATION

(11) **EP 2 551 703 A2**
(43) Date of publication of application: **30.01.2013**
(21) Application number: 12174725.7
(22) Date of filing: 03.07.2012
(51) Int. Cl.: G02B 3/08, F24J 2/08

(54) **Annular lens**

(30) Priority: 28.07.2011 TW 100126816
(71) Applicant: National Taiwan University of Science and Technology, Taipei 106 (TW)
(72) Inventor: Hsieh, Wei-Che, 106 Taipei (TW); Whang, Allen Jong-Woei, 106 Taipei (TW); Chen, Yi-Yung, 106 Taipei (TW)
(74) Representative: Viering, Jentschura & Partner

(57) **Abstract**

Annular lens (10) for collecting ambient light and comprising a curved surface (110a) onto which light is incident and a curved surface (120a) from which light is refracted and exits and a reflection surface (140a) connected to both sides there-between.

## Description

### BACKGROUND OF THE INVENTION

### (1) Field of the Invention

The invention relates to an annular lens and a light harvesting module, and especially relates to an annular lens for collecting an ambient light and a light harvesting lens module using the annular lens for converging the ambient light on a point to form a light source, to improve the effective utilization of the ambient light.

### (2) Description of the Prior Art

In recent years, environment conversation issues have paid more attention to make green energy became a new industry trends as the progressing of technology and the increasing of energy demand. Therefore, how to get extra efficient advantage of renewable energy is an important issue. Particularly, it aims to the problem of applying green energy into architecture industry for providing natural light but saving the building energy consumption at the same time. Wherein the building energy consumption includes air conditioner, illumination and household electricity, etc. The energy consumption of illumination takes a fifth of the building energy consumption. Thus, saving the energy consumption of the illumination will be the most important item of energy-saving developments in the architecture industry.

In the architecture industry, the illumination is provided as following: one is utilizing solar energy conversion technology to provide electricity by optic-electric conversion, but the conversion efficiency and the cost should be considered; another one is utilizing optical design for directly leading the solar light into the interior building so as to form a green illumination and to substantially increase the effective utilization of solar energy. By means of harvesting solar light, the solar light is guided into the interior building such as office, house, hallway, basement and etc., and is utilized as an auxiliary illumination, to decrease the energy consumption. The solar light is collected by a light harvesting device, and is guided into the interior building by a light guiding device. Moreover, the light harvesting device is applied in a solar energy system, for increasing the light collection efficiency to gain the conversion efficiency.

Though, the green illumination can directly lead the solar light into the interior building, the light energy is wasted in the processing of light collection, light transmission and illumination. Therefore, how to increase the concentration ratio and the compression ratio of the light harvesting device is the question urgently need to be solved in this field.

### SUMMARY OF THE INVENTION

Accordingly, one object of the invention is to provide an annular lens for collecting an ambient light.

Another object of the invention is to provide a light harvesting lens module for increasing the concentration ratio and the compression ratio to get further effective advantage from the ambient light.

In one aspect, the invention provides an annular lens for collecting an ambient light. The ambient light comprises a first light beam and a second light beam. The annular lens comprises a light-incident curved surface, a light-emitted curved surface and a reflection surface. The light-incident curved surface is disposed facing away from a center of said annular lens. The light-emitted curved surface is disposed opposite to the light-incident curved surface and faces toward to the center. The first light beam is incident on the light-incident curved surface and refracted and concentrated by the light-incident curved surface, then the first light beam is emitted from the annular lens via the light-emitted curved surface, and is refracted in a direction toward to the center by the light-emitted curved surface. The reflection surface is disposed between the light-incident curved surface and the light-emitted curved surface, and connected to a side of the light-incident curved surface and a side of the light-emitted curved surface. The second light beam is reflected by the reflection surface and is emitted in a direction toward to the center.

In an embodiment, the annular lens further includes a flat surface disposed opposite to the reflection surface, and the flat surface connects another side of the light-incident curved surface and another side of the light-emitted curved surface. Especially, the light-emitted curved surface is a depression surface.

In another embodiment of the annular lens, said light-emitted curved surface is a protruding surface, and the flat surface has a reflection area. The light-incident curved surface has a light-incident focus, and the light-incident focus is disposed on the reflection area, wherein the first light beam is focused on the light-incident focus by the light-incident curved surface and is reflected by the reflection area. The light-emitted curved surface has a light-emitted focus, and the light-emitted focus and the light-emitted focus are at the same position, so the first light beam focused on the light-emitted focus is reflected to the light-emitted curved surface by the reflection area.

In one aspect, the invention provides a light harvesting lens module comprising a first annular lens and a second annular lens which have the structure of said annular lens. The first annular lens has a first radius and the second annular lens has a second radius. The first radius and the second radius are different and the first radius is large enough than the second radius to enable the first annular lens and the second annular lens to be concentrically arranged end to end outwardly from a center thereof to form a disc-structure.

In another embodiment of the light harvesting lens module, the first annular lens has a first light-incident curved surface and a first light-emitted curved surface, the first light-emitted curved surface faces the center and the first light-incident curved surface is disposed opposite to the first light-emitted curved surface. The second annular lens has a second light-incident curved surface and a second light-emitted curved surface, the second light-emitted curved surface faces the first light-incident curved surface and the second light-incident curved surface is disposed opposite to the second light-emitted curved surface. Especially, the first light-incident curved surface and the second light-incident curved surface are protruding surfaces, and the first light-emitted curved surface and the second light-emitted curved surface are depression surfaces.

In another embodiment of the light harvesting lens module, said first light-incident curved surface, said second light-incident curved surface, said first light-emitted curved surface and said second light-emitted curved surface are protruding surfaces. The first light-incident curved surface and the first light-emitted curved surface have a first focus in common, and the second light-incident curved surface and the second light-emitted curved surface have a second focus in common. The first light beam focused on the second focus is reflected to the second light-emitted curved surface, and is refracted to the first light-incident curved surface by the second light-emitted curved surface. Then, the first light beam is refracted by the first light-incident curved surface and so is focused on the first focus. Afterward, the first light beam is reflected to the first light-emitted curved surface, and is refracted by the first light-emitted curved surface and is emitted toward the center.

In another embodiment of the light harvesting lens module, the light harvesting lens module further includes a light guiding unit disposed on the center for guiding the first light beam emitted from the light-emitted curved surface.

Compared to the conventional light harvesting lens module, the advantages of the light harvesting lens module of the invention are the smaller light harvesting space, the higher compression ratio and etc., so as to improve the concentration ratio and to get the effective advantage of the ambient light.

### BRIEF DESCRIPTION OF THE DRAWINGS

FIG. 1 is a top view of the light harvesting lens module of a first embodiment.

FIG. 2 is a partially sectional view of the light harvesting lens module in FIG. 1 cut along the external line O-O'.

FIGs. 3 and 4 are an sectional top view and, respectively, a sectional view of the light harvesting lens module of a second embodiment.

FIGs. 5 and 6 are an sectional top view and, respectively, a sectional view of the light harvesting lens module of a third embodiment.

FIG. 7 is a sectional view of the light harvesting lens module of a fourth embodiment.

FIG. 8 is a schematic view of the light harvesting lens module of the invention disposed around a building.

### DESCRIPTION OF THE PREFERRED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component facing "B" component directly or one or more additional components is between "A" component and "B" component. Also, the description of "A" component "adjacent to" "B" component herein may contain the situations that "A" component is directly "adjacent to "B" component or one or more additional components is between "A" component and "B" component. Accordingly, the drawings and descriptions will be regarded as illustrative in nature and not as restrictive.

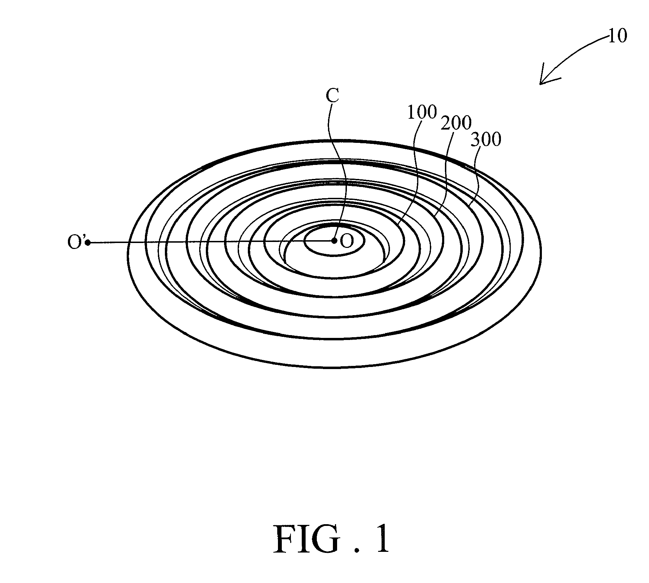

Refer to FIG. 1 for a top view of a light harvesting lens module of the first embodiment according to the invention. The light harvesting lens module 10 includes a plurality of annular lenses 100, 200, 300, used to converge an ambient light on a point to form a point source. The radii of the annular lenses 100, 200, 300 are different, so the annular lenses 100, 200, 300 are concentrically arranged end to end outwardly from a center C thereof to form a disc-structure of the light harvesting lens module 10.

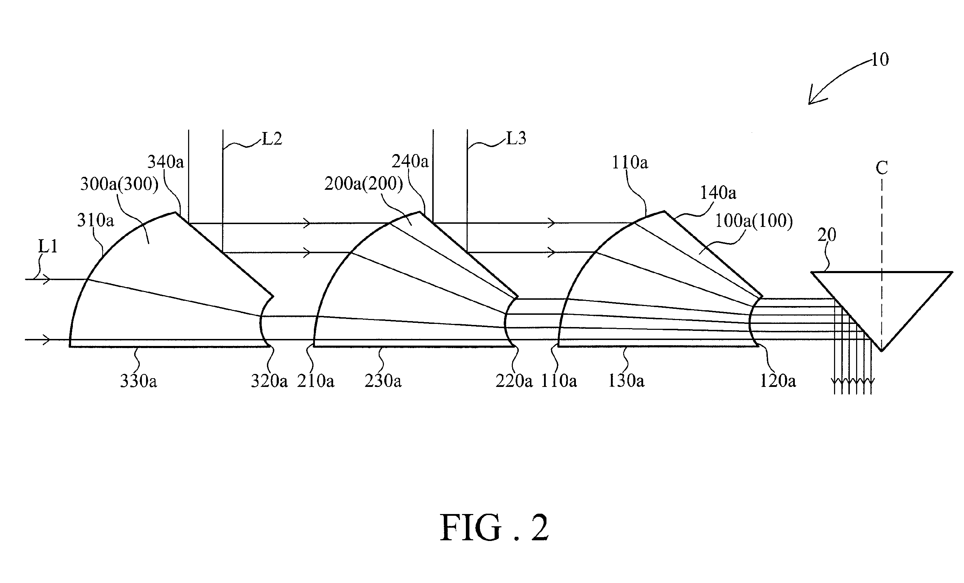

Refer to FIG. 2 for a partial sectional view of the light harvesting lens module in FIG. 1 cut along the external line O-O'. In the first embodiment, the section of the light harvesting lens module 10 includes a section of a first annular lens 100a, a section of a second annular lens 200a and a section of a third annular lens 300a.

The surface of the first annular lens 100 includes a first light-incident curved surface 110a, a first light-emitted curved surface 120a, a first flat surface 130a and a first reflection surface 140a. The first light-incident curved surface 110a is disposed at the outside of the first annular lens 100 facing away from the center C. The first light-emitted curved surface 120a is disposed opposite to the first light-incident curved surface 110a and at the inside of the first annular lens 100, and faces the center C. The first light-emitted curved surface 120a is a depression surface. The first flat surface 130a is disposed between the first light-incident curved surface 110a and the first light-emitted curved surface 120a, and is connected to a side of the first light-incident curved surface 110a and a side of the first light-emitted curved surface 120a. The first reflection surface 140a is disposed opposite to the first flat surface 130a, and is connected to another side of the first light-incident curved surface 110a and another side of the first light-emitted curved surface 120a. Wherein the first light-incident curved surface 110a and the first light-emitted curved surface 120a may be non-spherical surfaces.

The radius of the second annular lens 200 is larger than the radius of the first annular lens 100, so the first annular lens 100 is surrounded by the second annular lens 200. The surface of the second annular lens 200 includes a second light-incident curved surface 210a, a second light-emitted curved surface 220a, a second flat surface 230a and a second reflection surface 240a. The second light-incident curved surface 210a is disposed at the outside of the second annular lens 200 facing away from the center C. The second light-emitted curved surface 220a is disposed opposite to the second light-incident curved surface 210a and at the inside of the second annular lens 200, and faces the center C. The second light-emitted curved surface 220a is a depression surface. The second flat surface 230a is disposed between the second light-incident curved surface 210a and the second light-emitted curved surface 220a, and connects a side of the second light-incident curved surface 210a and a side of the second light-emitted curved surface 220a. The second reflection surface 240a is disposed opposite to the second flat surface 230a, and is connected to another side of the second light-incident curved surface 210a and another side of the second light-emitted curved surface 220a. Wherein the second light-incident curved surface 210a and the second light-emitted curved surface 220a may be non-spherical surfaces.

The radius of the third annular lens 300 is larger than the radius of the second annular lens 200, so the second annular lens 200 is surrounded by the third annular lens 300. The surface of the third annular lens 300 includes a third light-incident curved surface 310a, a third light-emitted curved surface 320a, a third flat surface 330a and a third reflection surface 340a. The third light-incident curved surface 310a is disposed at the outside of the third annular lens 300 facing away from the center C. The third light-emitted curved surface 320a is disposed opposite to the third light-incident curved surface 310a and at the inside of the third annular lens 300, and faces the center C. The third light-emitted curved surface 320a is a depression surface. The third flat surface 330a is disposed between the third light-incident curved surface 310a and the third light-emitted curved surface 320a, and is connected to a side of the third light-incident curved surface 310a and a side of the third light-emitted curved surface 320a. The third reflection surface 340a is disposed opposite to the third flat surface 330a, and is connected to another side of the third light-incident curved surface 310a and another side of the third light-emitted curved surface 320a. Wherein the third light-incident curved surface 310a and the third light-emitted curved surface 320a may be non-spherical surfaces.

The paths of converging the ambient light beams L1, L2 and L3 are described below. The light beam L2 is reflected to the second light-incident curved surface 210a by the third reflection surface 340a, and then is refracted to the second light-emitted curved surface 220a by the second light-incident curved surface 210a. Afterward, the light beam L2 is refracted by the second light-emitted curved surface 220a and is emitted from the second annular lens 200 so as to be parallel incident to the first light-incident curved surface 110a. Meanwhile, the light beam L3 is reflected to the first light-incident curved surface 110a by the second reflection surface 240a. The light beam L3 is refracted to the first light-emitted curved surface 120a by the first light-incident curved surface 110a, and then is refracted by the first light-emitted curved surface 120a and is emitted from the first annular lens 100 to be parallel incident to an axis of the center C.

Otherwise, the third annular lens 300 is surrounded by a fourth annular lens (without drawn). The light beam L1 is reflected by a fourth reflection surface (without drawn) of the fourth annular lens to guide to the third light-emitted curved surface 310a. Afterward, the light beam L1 is refracted by the third light-emitted curved surface 320a and is emitted from the third annular lens 300 to be parallel incident to the second light-incident curved surface 210a, so as to harvest the light beam L1 by the light harvesting lens module 10.

In an embodiment, a light guiding unit 20 is disposed on the center C, for example, a fiber with a cone structure. The light beams L1, L2 and L3 emitted from the first light-emitted curved surface 120a are incident to the light guiding unit 20 so as to be used for interior illumination, solar energy system, and etc.

By the arrangement of the first annular lens 100, the second annular lens 200 and the third annular lens 300 and the disc-structure thereof, the light beams L1, L2 and L3 are gradually converged via the outermost third annular lens 300 to the innermost first annular lens 100 on the center C. Therefore, the ambient light beams L1, L2 and L3 are converged on a point to form the point source by the light harvesting lens module 10, for increasing the compression ratio and for obtaining the effective advantage.

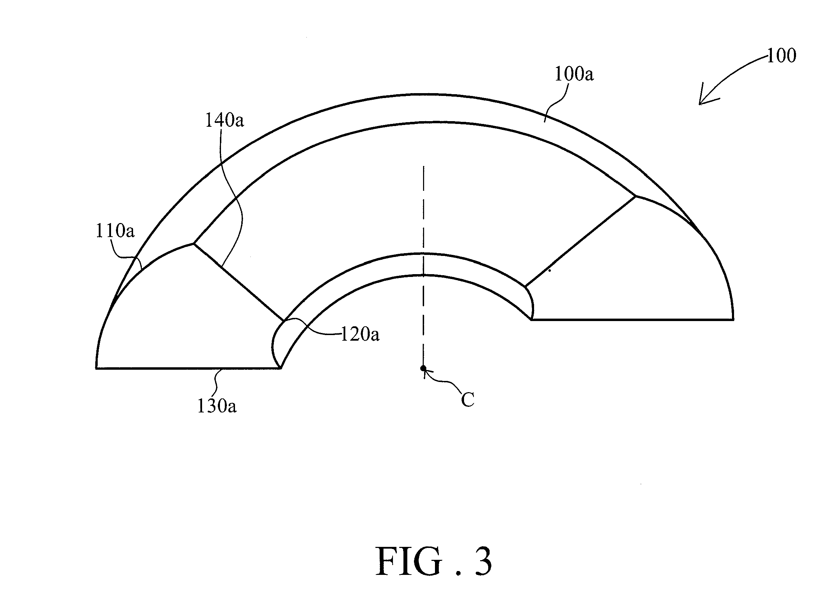

Refer to FIG. 3 for an sectional top view of the light harvesting lens module of a second embodiment according to the invention. The light harvesting lens module of the second embodiment only includes an annular lens 100. A center C is surrounded by the annular lens 100, and an axis of the center C is shown as the dotted line. The surface of the annular lens 100 includes a light-incident curved surface 110a, a light-emitted curved surface 120a, a flat surface 130a and a reflection surface 140a, wherein the light-incident curved surface 110a and the light-emitted curved surface 120a may be non-spherical surfaces. The light-incident curved surface 110a is a protruding surface and is disposed at the outside of the annular lens 100 facing away from the center C. The light-emitted curved surface 120a is a depression surface, and is disposed opposite to the light-incident curved surface 110a and at the inside of the annular lens 100, and faces the center C. The flat surface 130a is disposed between the light-incident curved surface 110a and the light-emitted curved surface 120a, and is connected to a side of the light-incident curved surface 110a and a side of the light-emitted curved surface 120a. The reflection surface 140a is disposed opposite to the flat surface 130a, and is connected to another side of the light-incident curved surface 110a and another side of the light-emitted curved surface 120a.

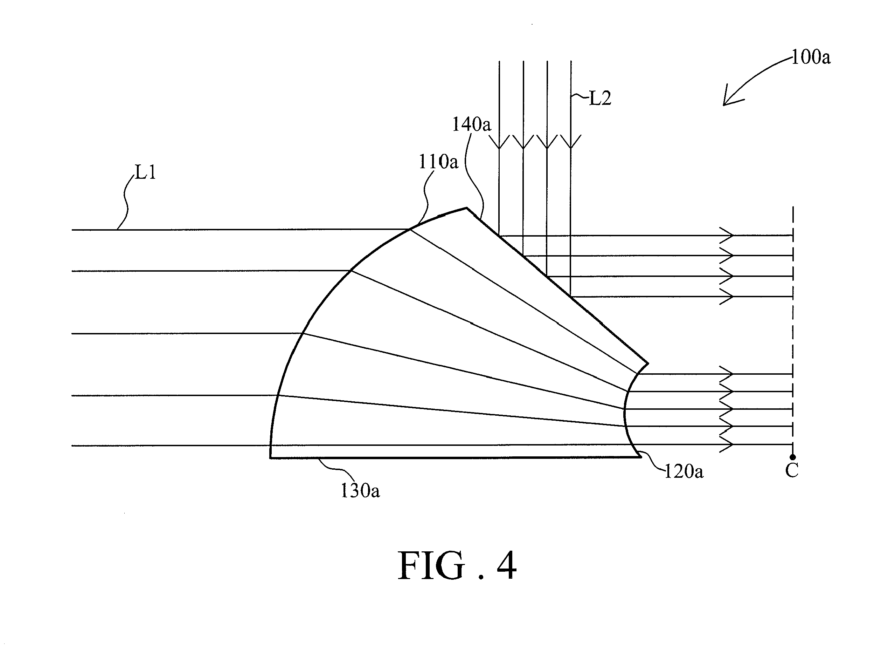

By the annular lens 100 for harvesting the ambient light beams L1 and L2, the paths of the light beams L1 and L2 are shown as FIG. 4. The light beam L1 is incident to the light-incident curved surface 110a and is refracted to the light-emitted curved surface 120a by the light-incident curved surface 110a. Afterward, the light beam L1 is refracted by the light-emitted curved surface 120a and is emitted from the annular lens 100 to be parallel incident to the axis of the center C. The light beam L2 is reflected by the reflection surface 140a and is incident to the axis of the center C.

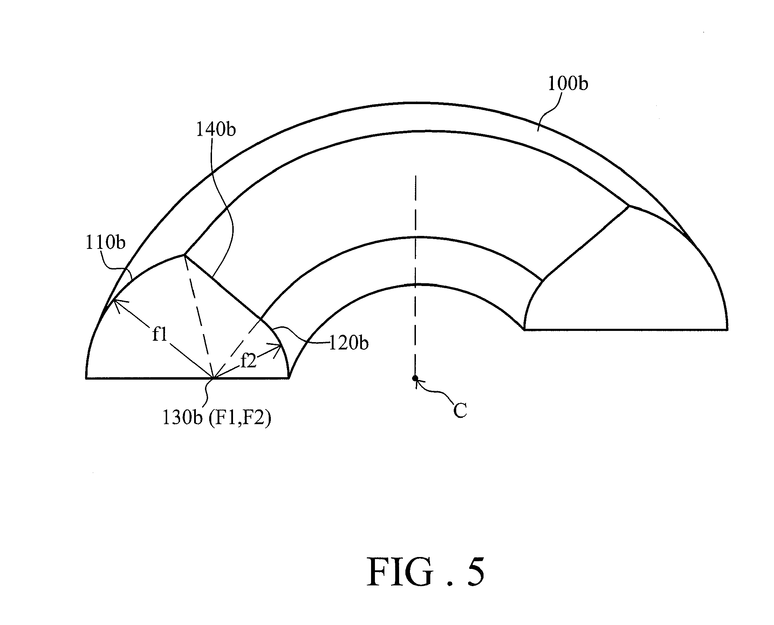

Refer to FIG. 5 for an sectional top view of the light harvesting lens module of a third embodiment according to the invention. The light harvesting lens module of the third embodiment only includes an annular lens 100b and has a center C. An axis of the center C is shown as the dotted line. The surface of the annular lens 100b includes a light-incident curved surface 110b, a light-emitted curved surface 120b, a flat surface 130b and a reflection surface 140b, wherein the light-incident curved surface 110b and the light-emitted curved surface 120b are protruding surfaces.

The light-incident curved surface 110b is disposed at the outside of the annular lens 100b facing away from the center C. The light-incident curved surface 110b may be a non-spherical surface and has a light-incident focus F1. The distance between the light-incident curved surface 110b and the light-incident focus F1 is a light-incident focal length fl . The light-emitted curved surface 120b is disposed opposite to the light-incident curved surface 110b and at the inside of the annular lens 100b, and faces the center C. The light-emitted curved surface 120b may be a non-spherical surface and has a light-emitted focus F2. The distance between the light-emitted curved surface 120b and the light-emitted focus F2 is a light-emitted focal length f2. Especially, the light-incident focus F1 and the light-emitted focus F2 are in the same position and are con-focal.

The flat surface 130b is disposed between the light-incident curved surface 110b and the light-emitted curved surface 120b, and is connected to a side of the light-incident curved surface 110b and a side of the light-emitted curved surface 120b. Especially, the flat surface 130b includes a reflection area (without label), and the light-incident focus F1 and the light-emitted focus F2 are disposed inside the reflection area. The reflection surface 140b is disposed opposite to the flat surface 130b, and is connected to another side of the light-incident curved surface 110b and another side of the light-emitted curved surface 120b.

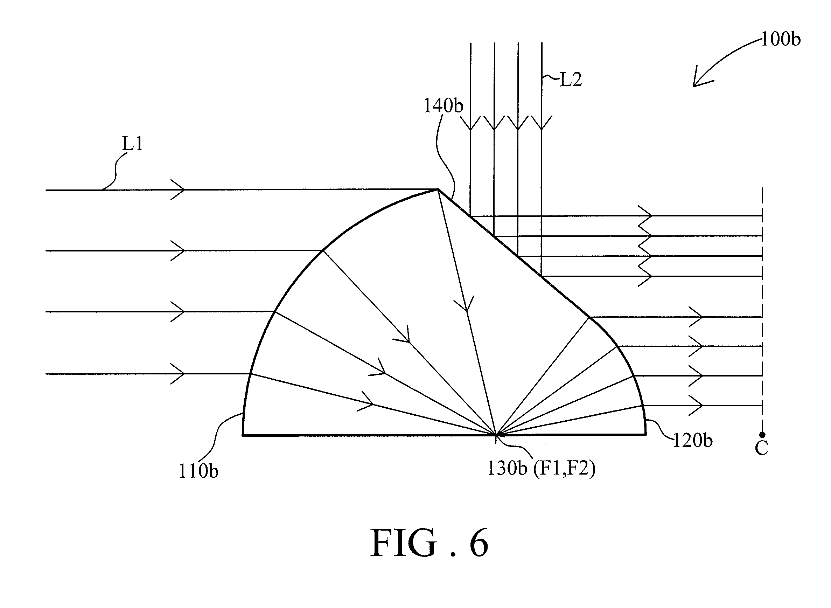

By the annular lens 100b for harvesting the ambient light beams L1 and L2, the paths of the light beams L1 and L2 are shown in FIG. 6. The light beam L1 is incident to the light-incident curved surface 110b and is focused on the light-incident focus F1 by the light-incident curved surface 110b. For the light-incident focus F1 disposed on the reflection area of the flat surface 130 and in the same position as the light-emitted focus F2, the light beam L1 from the light-incident curved surface 110b is reflected to the light-emitted curved surface 120b. Afterward, the light beam L1 is refracted by the light-emitted curved surface 120b and is emitted from the annular lens 100b to be parallel incident to the axis of the center C. The light beam L2 is reflected by the reflection surface 140b and is incident to the axis of the center C.

The light guiding unit may be disposed on the axis of the center in the embodiments of FIGs. 3-6. Therefore, the light beams L1, L2 and L3, emitted from the light-emitted curved surfaces 120a and 120b and reflected by the reflection surfaces 140a and 140b, are incident to the light guiding unit.

Because of the shape of the annular lens 100 formed by the non-spherical surfaces 110a and 120a, the ambient light beams L1, L2 and L3 are focused on a point by the annular lens 100, to form the point source applied for interior illumination, solar energy system, and etc.

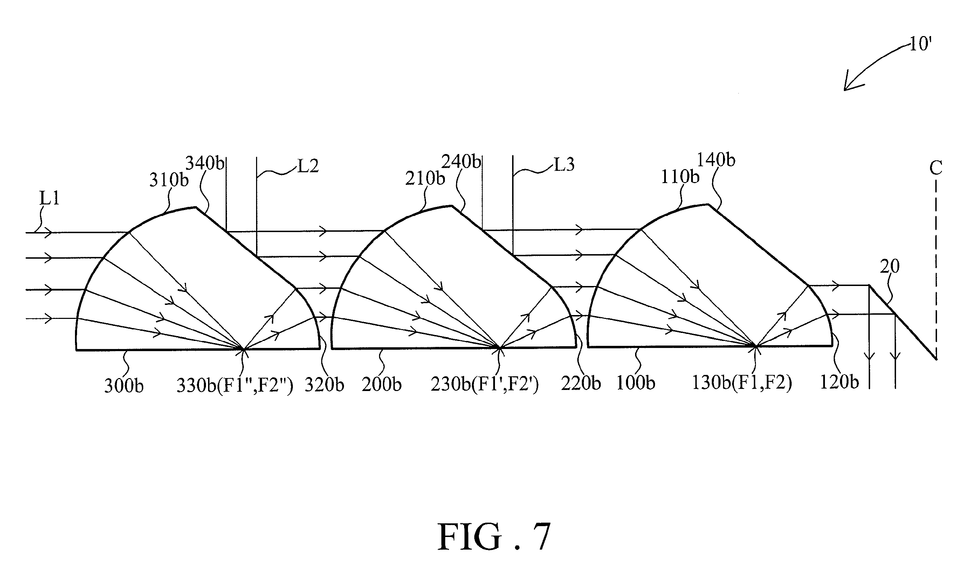

Referring to FIG. 7, the light harvesting lens module 10' of a fourth embodiment is composed of a plurality of annular lens as annular lens 100b as shown in FIGs. 5 and 6, and the annular lenses are arranged in order to form a disc-structure of the light harvesting lens module 10'.

The surface of a first annular lens 100b includes a first light-incident curved surface 110b, a first light-emitted curved surface 120b, a first flat surface 130b and a first reflection surface 140b. The first light-incident curved surface 110b is a protruding surface, and is disposed at the outside of the first annular lens 100b facing away from the center C. The first light-incident curved surface 110b has a first light-incident focus F1. The first light-emitted curved surface 120b is a protruding surface, is disposed opposite to the first light-incident curved surface 110b and at the inside of the first annular lens 100b, and faces the center C. The first light-emitted curved surface 120b has a second light-emitted focus F2. Wherein the first light-incident focus F1 and the first light-emitted focus F2 are con-focal and disposed on a reflection area (without label) of the first flat surface 130b. The first flat surface 130b is disposed between the first light-incident curved surface 110b and the first light-emitted curved surface 120b, and is connected to a side of the first light-incident curved surface 110b and a side of the first light-emitted curved surface 120b. The first reflection surface 140b is disposed opposite to the first flat surface 130b, and is connected to another side of the first light-incident curved surface 110b and another side of the first light-emitted curved surface 120b. In an embodiment, the distance between the first light-incident focus F1 and the centre C is defined as a radius of the first annular lens 100b.

The radius of the second annular lens 200b is larger than the radius of the first annular lens 100b, so the first annular lens 100b is surrounded by the second annular lens 200b. The surface of the second annular lens 200b includes a second light-incident curved surface 210b, a second light-emitted curved surface 220b, a second flat surface 230b and a second reflection surface 240b. The second light-incident curved surface 210b is disposed at the outside of the second annular lens 200b and facing away from the center C. The second light-incident curved surface 210b has a second light-incident focus F1'. The second light-emitted curved surface 220b is a protruding surface, is disposed opposite to the second light-incident curved surface 210b and at the inside of the second annular lens 200b, and faces the center C. The second light-emitted curved surface 220a has a second light-emitted focus F2'. Wherein the second light-incident focus F1' and the second light-emitted focus F2' are con-focal and are disposed on a reflection area (without label) of the second flat surface 230b. The distance between the second light-incident focus F1' and the centre C is the radius of the second annular lens 200b. The second flat surface 230b is disposed between the second light-incident curved surface 210b and the second light-emitted curved surface 220b, and is connected to a side of the second light-incident curved surface 210b and a side of the second light-emitted curved surface 220b. The second reflection surface 240b is disposed opposite to the second flat surface 230b, and is connected to another side of the second light-incident curved surface 210b and another side of the second light-emitted curved surface 220b.

The radius of the third annular lens 300b is larger than the radius of the second annular lens 200b, so the second annular lens 200b is surrounded by the third annular lens 300b. The surface of the third annular lens 300b includes a third light-incident curved surface 310b, a third light-emitted curved surface 320b, a third flat surface 330b and a third reflection surface 340b. The third light-incident curved surface 310b is disposed at the outside of the third annular lens 300b facing away from the center C. The third light-incident curved surface 310b has a third light-incident focus F1". The third light-emitted curved surface 320b is a protruding surface, is disposed opposite to the third light-incident curved surface 310b and at the inside of the third annular lens 300b, and faces the center C. The third light-emitted curved surface 320b has a third light-emitted focus F2". Wherein the third light-incident focus F1" and the third light-emitted focus F2" are con-focal and are disposed on a reflection area (without label) of the third flat surface 330b. The third flat surface 330b is disposed between the third light-incident curved surface 310b and the third light-emitted curved surface 320b, and is connected to a side of the third light-incident curved surface 310b and a side of the third light-emitted curved surface 320b. The third reflection surface 340b is disposed opposite to the third flat surface 330b, and is connected to another side of the third light-incident curved surface 310b and another side of the third light-emitted curved surface 320b.

In an embodiment, the distance between the third light-incident focus F1" and the centre C is defined as a radius of the third annular lens 300b. The first annular lens 100b, the second annular lens 200b and the third annular lens 300b are concentrically arranged end to end outwardly from a center C thereof to form a disc-structure of the light harvesting lens module 10'.

When the light beam L2 is incident to the third annular lens 300b, the light beam L2 is reflected to the second light-incident curved surface 210b by the third reflection surface 340b. Afterwards, the light beam L2 is refracted to the second flat surface 230b by the second light-incident curved surface 210b, and is reflected to the second light-emitted curved surface 220b by the reflection area of the second flat surface 230b. The light beam L2 is refracted by the second light-emitted curved surface 220b and is emitted from the second annular lens 200b so as to be parallel incident to the first light-incident curved surface 110b. Meanwhile, the light beam L3 is reflected to the first light-incident curved surface 110b by the second reflection surface 240b. The light beam L3 is refracted to the first flat surface 130b by the first light-incident curved surface 110b, and then is reflected to the first light-emitted curved surface 120b by the reflection area of the first flat surface 130b. The light beam L3 is refracted by the first light-emitted curved surface 120b and is emitted from the first annular lens 100b to be parallel incident to the axis of the center C.

Otherwise, the third annular lens 300b is surrounded by a fourth annular lens (without drawn). The light beam L1 is reflected to the third light-incident curved surface 310b by a fourth reflection surface (without drawn) of the fourth annular lens, and is refracted to the third flat surface 330b by the third light-incident curved surface 310b. Then, the light beam L1 is reflected to the third light-emitted curved surface 320b by the reflection area of the third flat surface 330b. Afterward, the light beam L1 is refracted by the third light-emitted curved surface 320b and is emitted from the third annular lens 300b to be parallel incident to the second light-incident curved surface 210b, so the light beam L1 is collected by the light harvesting lens module 10'. In an embodiment, a light guiding unit 20 is disposed on the center C, and the light beams L1, L2 and L3 are guided to be applied for interior illumination, solar energy system, and etc. by the light guiding unit 20.

By the arrangement of the first annular lens 100b, the second annular lens 200b and the third annular lens 300b and the disc-structure thereof, the light beams L1, L2 and L3 are gradually converged via the outermost third annular lens 300b to the innermost first annular lens 100b on the center C. Therefore, the ambient light beams L1, L2 and L3 are converged on a point to form the point source by the light harvesting lens module 10', for increasing the compression ratio and for obtaining the effective advantage.

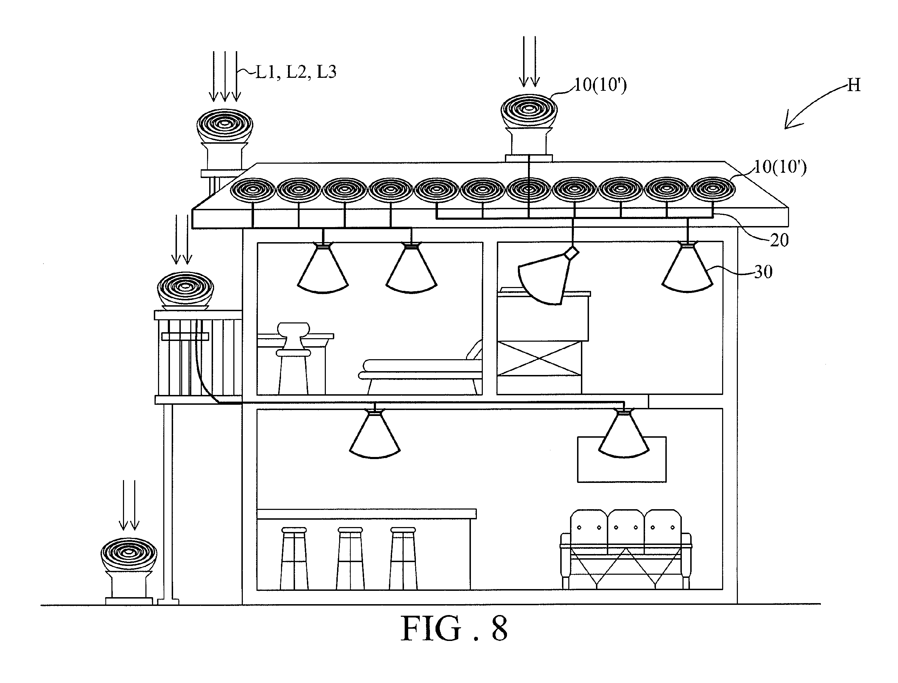

Refer to FIG. 8 for a schematic view of the light harvesting lens module of the invention disposed around a building H. The light harvesting lens modules 10 and 10' are paved to the roof, the eaves and the wall of the building H, the courtyard and etc. The light beams L1, L2 and L3, which are guided into the building by the light guiding unit 20, are applied for interior illumination to form a smart illumination system, or is applied to a solar energy system to increase the light collection efficiency.

The design of the annular lens and the arrangement of the light harvesting lens module are to increase the light compaction efficiency, and the disc-structure of the light harvesting lens module is to improve the light collection efficiency, so as to increase the compression ratio and the light utilization efficiency. The light harvesting lens module is applied in the light illumination, the solar energy system, the related green industry, so as to get the effective advantage of the ambient light and to save energy resource.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention is defined by the claims appended hereto and their equivalents in which all terms are meant in their broadest reasonable sense unless otherwise indicated. Therefore, the term "the invention", "the present invention" or the like does not necessary limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An annular lens (100) for collecting an ambient light, the ambient light comprising a first light beam (L1) and a second light beam (L2), the annular lens (100) comprising:
a light-incident curved surface (110a) disposed facing away from a center (C) of said annular lens;
a light-emitted curved surface (120a) disposed opposite to the light-incident curved surface (110a) and facing toward to the center (C), wherein the first light beam (L1) is incident on the light-incident curved surface (110a) and refracted and concentrated by the light-incident curved surface (110a), then the first light beam (L1) is emitted from the annular lens (100) via the light-emitted curved surface (120a), and is refracted in a direction toward to the center (C) by the light-emitted curved surface (120a); and
a reflection surface (140a), disposed between the light-incident curved surface (110a) and the light-emitted curved surface (120a), and connected to a side of the light-incident curved surface (110a) and a side of the light-emitted curved surface (120a), wherein the second light beam (L2) is reflected by the reflection surface (140a) and is emitted in a direction toward to the center (C).

2. The annular lens (100) of claim 1, further comprising a flat surface (130a) disposed opposite to the reflection surface (140a), and the flat surface (130a) connected to the other side of the light-incident curved surface (110a) and the other side of the light-emitted curved surface (120a).

3. The annular lens (100) of claims 1 or 2, wherein the light-emitted curved surface (120a) is a depression surface.

4. The annular lens (100) of claims 1 or 2, wherein the light-emitted curved surface (120b) is a protruding surface, and the flat surface (130b) has a reflection area.

5. The annular lens (100) of claim 4, wherein the light-incident curved surface (110b) has a light-incident focus (F1), and the light-incident focus (F1) is disposed on the reflection area, wherein the first light beam (L1) is focused on the light-incident focus (F1) by the light-incident curved surface (110b) and is reflected by the reflection area.

6. The annular lens (100) of claim 5, wherein the light-emitted curved surface (120b) has a light-emitted focus (F2), and the light-emitted focus (F2) and the light-incident focus (F1) are at the same position, thereby the first light beam (L1) focused on the light-incident focus (F1) is reflected to the light-emitted curved surface (120b) by the reflection area.

7. A light harvesting lens module (10) comprising:
a first annular lens according to Claim 1 with a first radius; and
a second annular lens according to Claim 1 with a second radius;
wherein the first radius and the second radius are different and the first radius is large enough than the second radius to enable the first annular lens and the second annular lens to be concentrically arranged end to end outwardly from a center (C) thereof to form a disc-structure.

8. The light harvesting lens module (10) of claim 7, wherein the first annular lens (100) has the first light-incident curved surface (110a) and the first light-emitted curved surface (120a), the first light-emitted curved surface (110a) faces the center (C), the first light-incident curved surface (110a) is disposed opposite to the first light-emitted curved surface (120a); and
the second annular lens (200) has a second light-incident curved surface (210a) and a second light-emitted curved surface (220a), the second light-emitted curved surface (220a) faces the first light-incident curved surface (110a), and the second light-incident curved surface (210a) is disposed opposite to the second light-emitted curved surface (210a).

9. The light harvesting lens module (10) of claim 8, wherein the first light-incident curved surface (110b) and the first light-emitted curved surface (120b) have a first focus in common, and the second light-incident curved surface (210b) and the second light-emitted curved surface (220b) have a second focus in common,
wherein the first light beam (L1) focused on the second focus is reflected toward to the second light-emitted curved surface (220b), and thereafter the first light beam (L1) is refracted by the second light-emitted curved surface (220b) toward the first light-incident curved surface (110b), the first light beam (L1) is refracted by the first light-incident curved surface (110b) so is focused on the first focus, then the first light beam (L1) is reflected to the first light-emitted curved surface (120b), and is refracted by the first light-emitted curved surface (120b) and is emitted towards the center (C).

10. The light harvesting lens module (10) of one of the claims 7 to 9, further comprising a light guiding unit (20) disposed on the center (C) for guiding the first light beam (L1) and the second light beam (L2) emitted from the light-emitted curved surface (120a).
